# EUROPEAN PATENT SPECIFICATION

(11) **EP 1 664 125 B1**
(45) Date of publication and mention of the grant of the patent: **24.03.2010**
(21) Application number: 04767037.7
(22) Date of filing: 10.09.2004
(51) Int. Cl.: C08B 31/04, C08J 3/09

(54) **STARCH ESTERIFICATION METHOD**
STÄRKEVERESTERUNGSVERFAHREN
PROCEDE D'ESTERIFICATION D'AMIDON

(30) Priority: 11.09.2003 FI 20031301
(43) Date of publication of application: 07.06.2006
(73) Proprietor: Kemira Oyj, 00180 Helsinki (FI)
(72) Inventor: MYLLYMÄKI, Vesa, FI-00200 Helsinki (FI); AKSELA, Reijo, FI-02360 Espoo (FI)
(74) Representative: Saijonmaa, Olli-Pekka
(86) International application number: PCT/FI2004/000523
(87) International publication number: WO 2005/023873

(56) References cited:
- WO-A-03/029329
- GB-A- 1 425 624
- US-A- 1 943 176
- DATABASE CHEMABS CHEMICAL ABSTRACTS SERVICE, COLUMBUS, OHIO, US; "Preparation of N-alkoxyalkylimidazolium salts and ionic liquid or gel containing them." XP002313845 retrieved from STN Database accession no. 136:85811 & JP 2002 003478 A (FOUNDATION FOR SCIENTIFIC TECHNOLOGY PROMOTION JAPAN) 9 January 2002 (2002-01-09)
- HOLBREY J. D. ET AL.: "Applying ionic liquid solvent chearacteristics for controlled processing of polymer materials" POLYMER PREPRINTS, vol. 45, no. 1, 2004, pages 297-298, XP008041589
- KIMIZUKA N ET AL: "Spontaneous Self-Assembly of Glycolipid Bilayer Membranes in Sugar-philic Ionic Liquids and Formation of Ionogels" LANGMUIR, ACS, WASHINGTON, DC, US, vol. 17, 2001, pages 6759-6761, XP002219946 ISSN: 0743-7463

## Description

### Field of the invention

The present invention is directed to a new method for preparing organic starch esters.

### Background art

### Starch

Unlike other carbohydrates and edible polymers, starch occurs as discrete particles called starch granules. These are generally composed of two type of molecules, amylose and amylopectin. Of these, amylose is a linear (1,4)-α-D-glucan, while amylopectin is a branched, bushlike structure containing both (1,4)-α-D linkages between D-glucose residues and (1,6)-α-D branch points, Ullmann's Encyclopedia of Industrial Chemistry, Vol. A25, 1994, p. 1-18*.* Following formulae depict representative structures of amylose and amylopectin.

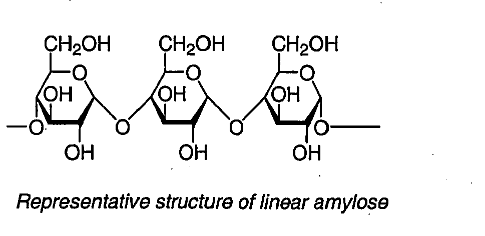

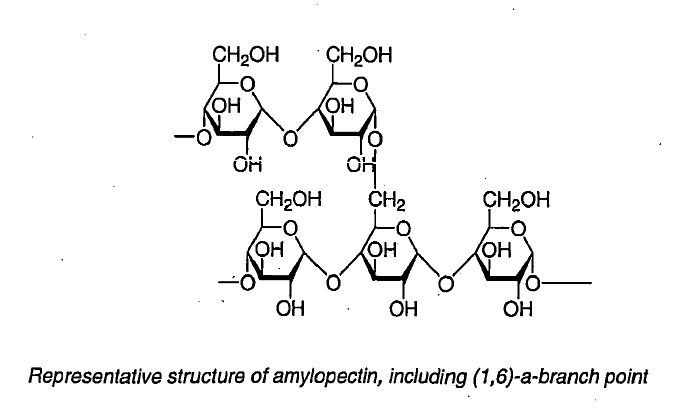

Normal starches contain approximately 75% amylopectin molecules the rest consisting of amylose. Amylopectin is a very large molecule with molecular masses ranging from one to several millions. Linearly structured amylose is considerably smaller and the molecular masses usually fall in the range of 5000 - 200000.

Commercial starches are obtained from seeds, particularly corn, wheat, rice, tapioca arrowroot, sago, and potato. Especially in Scandinavia, also barley is utilized as a native starch source. Among these, the starch granules vary in diameter from 1-100 µm. Rice starch has the smallest granules (3-9 µm), potato starch ranges between 15-100 µm and corn starch granules are 5-26 µm with an average diameter of 15 µm. Additionally, wheat starch granules are typically from 3 to 35 µm and corresponding barley starch from 5 to 35 µm. Kirk-Othmer, Encyclopedia of Chemical Technology, 1997, 4th edition, Vol. 22, p. 699-719 and Ketola H, Andersson T, Papermaking Chemistry, 1999, Book 4, p. 269-274.

Due to their extremely high molecular masses as well as chemical composition consisting of both amylose and especially bushlike amylopectin, these branched polysaccharides are practically insoluble into other solvents than water. And in water, the starch granules must be cooked before they will release their watersoluble molecules. In general, they do not form true solutions in water because of their molecular sizes and intermolecular interactions; rather they form molecular dispersions. Most starch derivatives can be prepared from any native starch but, for reasons of solublity and molecular size, they are mainly produced from potato starch and, in the United States, from waxy maize starch.

Above a certain temperature, characteristic for each type of starch and known as gelatinization temperature, the starch grains burst and form a gel. The viscositity increases to a maximum, and then decreases asymptotically to a limiting value as the solubilized polymer molecules in water disperse. Complete solubilization of individual molecules of a starch grain only occurs above 100°C, Ullmann's Encyclopedia of Industrial Chemistry, Vol. A26, 1995, p. 246-248*.*

The effect of thermal treatment on starches depends strongly on whether it occurs in excess water, limited water, under pressure, or in extrusion cooking. In excess water it appears that starch swelling is a two-stage process consisting of initial granule swelling followed then by granule dissolution. Both of these steps are irreversible. In limited water, thermal responses have been interpreted as being due to starch crystallite melting. When extrusion cooking is applied, starch granules are torn physically apart, allowing thus more rapid penetration of water into the granule. In contrast to normal gelatinization, starch fragmentation (dextrinization) appears to be the predominant reaction during extrusion, Kirk-Othmer, Encyclopedia of Chemical Technology, 1997, 4th edition, Vol. 22, p. 699-719*.*

### Organic starch esters

A large number of organic starch esters have been prepared and patented, but only a few are at present manufactured and used commercially. Practically, these are starch acetates (i.e. acetylated starch) and to little extent, starch succinates.

Starch acetates may have low or high degree of substitution. The degree of substitution of starch esters is a measure of the average number of hydroxyl groups on each anhydroglucose unit which are derivatized by substituent groups. As each anhydroglucose unit has three hydroxyl groups available for substitution the maximum possible DS is 3. Material with a lower DS (0.3-1.0), *i*.*e*. with acetyl content up to 15%, are soluble in water at 50-100°C. Starch acetates with degrees of substitution of ca. 0.5 have roughly the same solubiltiy as normal starch. Those with high DS (2-3), acetyl content thus exceeding 40%, are soluble in organic solvents with lower polarity (aromatic hydrocarbons, ketones, nitroalkanes etc.) and insoluble in water, diethyl ether, aliphatic alcohols, and aliphatic hydrocarbons. Starch acetates with such high degree of substitution have increased densities, specific rotations, and melting temperatures. Most of the present commercial products are actually very lightly substituted (DS 0.01-0.2), though.

The industrial importance of low DS acetates results from their ability to stabilize aqueous polymer solutions. Low DS acetates inhibit association of amylose polymers and reduce the association of the longer outer chains of amylopectin. They also have reduced gelatinization temperature ranges, an increased hot cooked paste viscosity, easier dispersion on cooking as well as reduced tendency to retrograde after pasting and cooling.

Retrogradation can be explained as irreversible insolubilization of starch paste with formation of a precipitate or gel depending on concentration and is commonly known as "set back". This is important in food applications but the extremely good viscosity stability gained by acetylation is also strongly wellcomed in applications in paper industry. As a surface size, it improves printability and gives uniform surface strength, porosity, solvent resistance, and abrasion resistance. Further, low DS starch acetates are employed as warp sizing in textiles to provide good yarn adhesion, tensile strenght as well as flexibility.

High DS starch acetates are employed in thermoplastic molding as well as in films as plasticizers. Films of such a high DS acetate, cast from chloroform solution, are pliable, lustrous, transparent, and colorless. These properties are useful for instance in packaging materials. Amylose triacetate can also be spun into strong fibers, Kirk-Othmer, Encyclopedia of Chemical Technology, 1997, 4th edition, Vol.22, p. 699-719 and Ullmann's Encyclopedia of Industrial Chemistry, Vol. A25, 1994, p. 1-18.

### Acetylation of starch

Literature knows several methods to prepare starch acetates, Kirk-Othmer, Encyclopedia of Chemical Technology, 1997, 4th edition, Vol. 22, p. 699-719 and Ullmann's Encyclopedia of Industrial Chemistry, Vol. A25, 1994, p. 1-18. Most of the processes typically employ acetic anhydride, with or without catalysts. Commercially, low DS (0,5) acetylated starch is prepared in a system employing acetic anhydride-aqueous alkali at pH 7-11 and room temperature. This method can only be employed when preparing lightly substituted acetylated starches, however. Other methods presented below utilize anhydrous media. In these, the reaction is very sluggish and, in addition, the granules require time-consuming prior swelling to allow penetration by the acetylation reagents.

Starch granules treated with acetic anhydride alone at 20°C for 5 months does not result in any reaction. At room temperature, pyridine treatment renders the starch granule reactive, though. Treatment with sole acetic anhydride at elevated temperatures (90-140°C) showes slight activity; cooking and disruption of starch granules increases indeed the reactivity but employing acid catalysts result in starch degradation. When performing the same reaction with acetic anhydride and glacial acetic acid, the reaction requires the addition of an acidic catalyst such as sulfuric acid, perchloric acid or phosphoric acid.

Treatment of starch with acid anhydride in DMSO (dimethyl sulfoxide) requires expensive triethylamine as a catalyst and acid scavenger. With this method, starch derivatives of acetic, propanoic, and butanoic anhydrides have been prepared up to DS of 0.08.

When employing glacial acetic acid alone at 100°C for 5-13 h, the esterification gives a product with 3-6% content of acetyl groups. Treatment of starch with concentrated formic acid leads to gelatinization and simultaneous esterification.

Acetylation with ketene produces starch with an acetyl content of 2.2-9.4%. The reaction is usually conducted in acetic acid, diethyl ether or acetone with an acid catalyst.

Also vinyl acetate has been employed in the acetylation. Thus, for example US 3 022 289 discloses a method of chemically modifying starch comprising reacting starch in the presence of an alkaline catalyst, such as an alkali metal carbonate or hydroxide, ammonium hydroxide or an aliphatic amine, and more than 10% water by weight of dry starch with an ester of a carboxylic acid and an ethylenically unsaturated alcohol, such as vinyl acetate.

Preparation of high DS starch acetates always requires the use of anhydrous methods described previously, but also prolonged reaction times.

US 2 461 139 discloses a method for preparing starch esters. The method includes reacting starch and water with an organic acid anydride and maintaining the pH of the reaction in the alkaline range between 7 and 11. The organic acid anhydrides include acetic anhydride, propionic anhydride, phthalic anhydride and butyric anhydride. Typically, starch is suspended in water at 25°-30°C and sodium hydroxide is added to raise the pH to about 10. Then enough acetic anhydride is added to the suspension to lower the pH to about 7 followed by separating the starch ester by filtration.

GB 1 425 624 discloses a process for the chemical modification of starch. The method includes the step of subjecting a mixture of starch and a modifying agent to microwave energy under such conditions that the water content during the radiation treatment is or reduces to less that 10% by weight of the starch. The application of microwaves is said to reduce the reaction time and increase the yields. According to GB 1 425 624 the chemical modifications include dextrination, oxidation, hydrolysis and derivatisation with monofunctional or polyfunctional etherifying and esterifying agents. Typically, the starch is suspended in an aqueous solution or suspension of the modifying agent. After stirring the suspension is dried and the obtained starch reaction mixture is subjected to microwave radiation in a fluidised bed. Due to the low water content and the absence of any liquid medium the modification is carried out in solid phase.

### Ionic liquids

The literature knows many synonyms used for ionic liquids. Up to date, "molten salts" is maybe the most broadly applied term for ionic compounds in the liquid state. There is a difference between molten salts and ionic liquids, however. Ionic liquids are salts that are liquid around room temperature (typically -100°C to 200°C, but this might even exceed 300°C) (Wassercheid, P.; Welton, T. Ionic Liquids in Synthesis 2003, WILEY-VCH, p. 1-6, 41-55 and 68-81). Therefore, the term RTIL (room temperature ionic liquids) is commonly applied for these solvents.

RTILs are non-flammable, non-volatile and they possess high thermal stabilities. Typically, these solvents are organic salts or mixtures consisting of at least one organic component. By changing the nature of the ions present in an RTIL, it is possible to change the resulting properties of the RTILs. The lipophilicity of an ionic liquid of a RTIL is easily modified by the degree of cation substitution. Similarly, the miscibility with for example water and other protic solvents can be tuned from complete miscibility to almost total immiscibility, by changing the anion substitution.

All these variations in cations and anions can produce a very large range of ionic liquids allowing the fine-tuning for specific applications. Furthermore, the RTILs are relatively cheap and easy to manufacture. They can also be reused after regeneration.

US 1 943 176 discloses a process for the preparation of solutions of cellulose by dissolving cellulose under heating in a liquefied N-alkylpyridinium or N-benzylpyridinium chloride salt, preferably in the presence of an anhydrous nitrogen-containing base, such as pyridine. These salts are known as ionic liquids. The cellulose to be dissolved is preferably in the form of regenerated cellulose or bleached cellulose or linter. According to US 1 943 176 the cellulose solutions are suitable for various chemical reactions, such as esterification. US 1 943 176 also suggests separating cellulose from the cellulose solution by means of suitable precipitating agents, such as water or alcohol to produce for example cellulose threads or films or masses.

JP2002003478 (indexed by Chemical Abstract, CA 136:85811) discloses the use of imidazolium salts as solvent and reaction medium for cyclodextrin and agarose in chemical modification processes using water-unstable modifying agents such as acid halides or anhydrides.

Also WO 03/029329 suggests dissolving pure cellulose in various ionic liquids especially under microwave irradiation. The dissolved cellulose can be regenerated in a range of structural forms.

### Microwaves

It is known from the recent literature concerning organic synthesis that the reaction times of the organic reactions are remarkable reduced when the energy necessary for the occurrence of the reaction is introduced to the system by using microwave irradiation. The commonly used frequency for microwave energy is 2.45 GHz. There is a wide and continuously increasing literature available in the area of using microwave techniques in organic synthesis. An example of a short summary article of this topic was published by Mingos in 1994 (D. Michael P. Mingos; "Microwaves in chemical synthesis" in Chemistry and industry 1. August 1994, pp. 596-599). Loupy *et al*. have recently published a review concerning heterogenous catalysis under microwave irradiation (Loupy, A., Petit, A., Hamelin, J., Texier-Boullet, F., Jachault, P., Mathe, D.; "New solvent-free organic synthesis using focused microwave" in Synthesis 1998, pp. 1213-1234). Another representative article of the area is published by Strauss as an invited rewiev article (C.R. Strauss; "A combinatorial approach to the development of Environmentally Benign Organic Chemical Preparations", Aust. J. Chem. 1999, 52, 83-96).

### Summary of the invention

It is an object of this invention to provide a method for preparing organic starch esters.

The present invention is based on the surprising discovery that native starch as well as hydrolyzed starch can be dissolved in an ionic liquid, the dissolved starch can be acetylated with acetic anhydride without any catalysts, and the acetylated starch ester can be precipitated from the reaction medium by the addition of various alcohols.

Thus, this invention accomplishes an efficient, gentle and environmentally benign preparation of organic starch esters in ionic liquids and a simple, economical separation of reaction products by precipitating the prepared product by adding a non-solvent for the product.

### Brief description of the drawings

In the enclosed drawings Fig. 1 shows a spectrum obtained by FTIR analysis of a acetylated starch sample prepared by the method of the present invention, Fig 2 shows a spectrum obtained by FTIR analysis of a propionylated starch sample prepared by the method of the present invention, and Fig. 3 shows a spectrum obtained by FTIR analysis of a starch maleic ester sample prepared by the method of the present invention.

### Detailed description of the invention

According to the invention there is provided a method for preparing an organic starch ester, said method comprising mixing a starch material with an ionic liquid solvent to dissolve the starch, and then treating the dissolved starch with an organic esterifying agent to form an organic starch ester, and subsequently separating the organic starch ester from the solution.

The starch material can be any untreated or treated starch material, such as native starch or hydrolyzed starch. The starch can be derived from e.g. com, wheat, rice, tapioca arrowroot, sago, potato or barley.

The dissolution and esterification can be assisted by applying microwave irradiation and/or pressure.

The pressure is preferably at most 2.0 MPa and more preferably between 1.5 MPa and 2.0 MPa.

The dissolution of the starch material can be carried out at a temperature between 0°C and 250°C, preferably at a temperature between 10°C and 170°C, such as between 20º°C and 130°C. If microwave irradiation is applied, the heating can be carried out be means of this irradiation. The solution is agitated until complete dissolution is obtained.

In the dissolution no auxiliary organic solvents or co-solvents, such as nitrogen-containing bases, e.g. pyridine, are necessary. Preferably such solvents are omitted.

The dissolution is preferably carried out in the substantial absence of water. The phrase "in the substantial absence of water" means that not more than a few percent by weight of water is present. Preferably, the water content is less than 1 percent by weight.

The starch can be present in the solution in an amount of about 1% to 35% by weight of the solution. Preferably the amount is from about 10% to about 20%.

The esterification can be carried out at the same temperature as the dissolution or at a lower temperature. The esterification is preferably also carried out in the substantial absence of water. No catalysts are necessary, and the esterification is preferably carried out without a catalyst.

The ionic liquid solvent is molten at a temperature between -100°C and 200°C, preferably at a temperature of below 170°C, and more preferably between -50°C and 120°C.

The cation of the liquid solvent is preferably a five- or six-membered heterocyclic ring optionally being fused with a benzene ring and comprising as heteroatoms one or more nitrogen, oxygen or sulfur atoms. The heterocyclic ring can be aromatic or saturated. The cation can be selected from the group consisting of 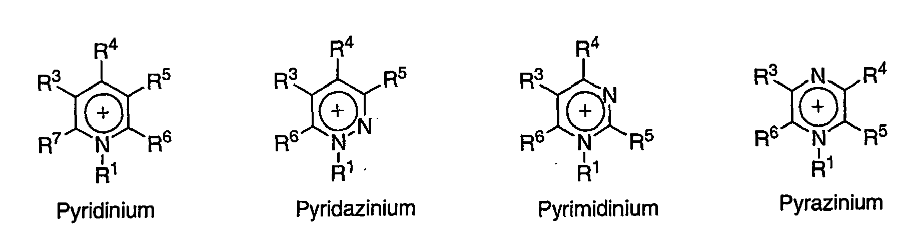 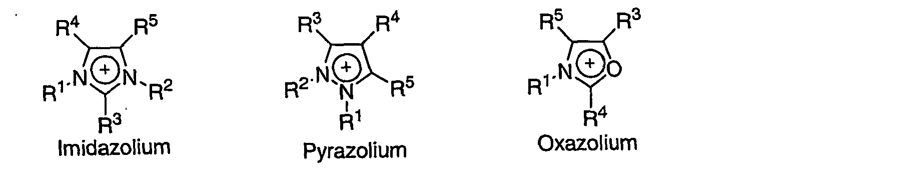 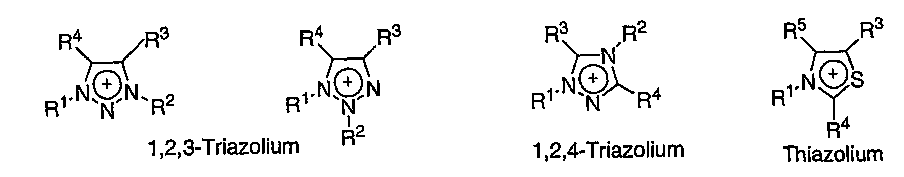 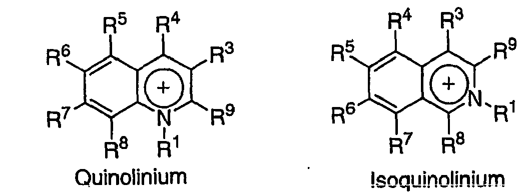 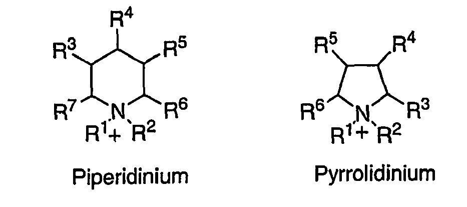 wherein R¹ and R² are independently a C₁-C₆ alkyl or C₂-C₆ alkoxyalkyl group, and R³, R⁴, R⁵, R⁶, R⁷, R⁸ and R⁹ are independently hydrogen, a C₁-C₆ alkyl, C₂-C₆ alkoxyalkyl or C₁-C₆ alkoxy group.

In the above formulae R¹ and R² are preferably both C₁-C₄ alkyl, and R³-R⁹, when present, are preferably hydrogen.

C₁-C₆ alkyl includes methyl, ethyl, propyl, iso-propyl, butyl, sec-butyl, tert-butyl, pentyl, the isomers of pentyl, hexyl and the isomers of hexyl.

C₁-C₆ alkoxy contains the above C₁-C₆ alkyl bonded to an oxygen atom.

C₂-C₆ alkoxyalkyl is an alkyl group substituted by an alkoxy group, the total number of carbon atoms being from two to six.

Preferred cations have following formulae: 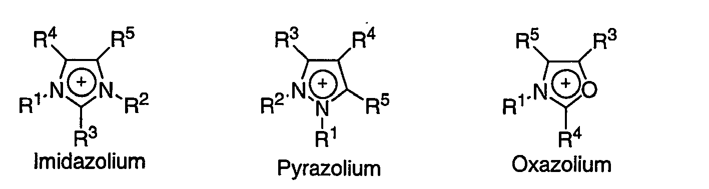 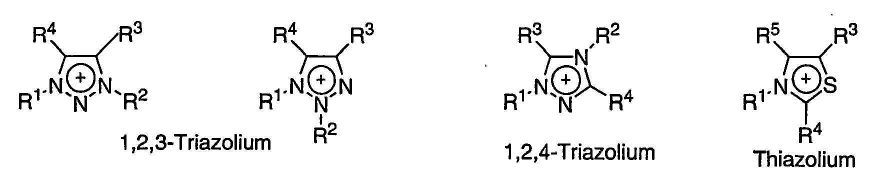 wherein R¹- R⁵ are as defined above.

An especially preferred cation is the imidazolium cation having the formula: 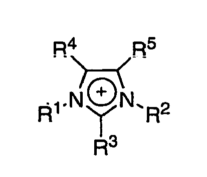 wherein R¹-R⁵ are as defined above. In this formula R³-R⁵ are preferably each hydrogen and R¹ and R² are independently C₁-C₆ alkyl or C₂-C₆ alkoxyalkyl. More preferably one of R¹ and R² is methyl and the other is C₁-C₆ alkyl.

The anion of the ionic liquid solvent can be halogen such as chloride, bromide or iodide;
pseudohalogen such as thiocyanate or cyanate;
perchlorate;
C₁-C₆ carboxylate such as formate, acetate, propionate, butyrate, lactate, pyruvate, maleate, fumarate or oxalate;
nitrate;
C₂-C₆ carboxylate substituted by one or more halogen atoms such as trifluoroacetic acid;
C₁-C₆ alkyl sulfonate substituted by one or more halogen atoms such as trifluoromethane sulfonate (triflate);
tetrafluoroborate BF₄⁻, or
phosphorus hexafluoride PF₆⁻.

The above halogen substituents are preferably fluoro.

The anion of the ionic liquid solvent is preferably selected among those providing a hydrophilic ionic liquid solvent. Such anions include halogen, pseudohalogen or C₁-C₆ carboxylate. The halogen is preferably chloride, bromide or iodide, and the pseudohalogen is preferably thiocyanate or cyanate.

If the cation is a 1-(C₁-C₆-alkyl)-3-methyl-imidazolium, the anion is preferably a halogen, especially chloride.

A preferred ionic liquid solvent is 1-butyl-3-methyl-imidazolium chloride (BMIMCI) having a melting point of about 60°C.

The organic esterifying agent is preferably a C₁-C₁₁, more preferably a C₁-C₆ carboxylic acid or a reactive derivative thereof. The hydrocarbon moiety of the organic esterifying agent can be saturated or unsaturated, aliphatic or aromatic, and may optionally be substituted by one or more of following groups: carboxylic, halide, amino, hydroxyl ether and epoxy. Typical esterifying agents include formic acid, acetic acid, propanoic acid, butanoic acid, maleic acid, malic acid, succinic acid, itaconic acid, chloroacetic acid, alanine and phthalic acid, and corresponding anhydrides. It is also possible to use other reactive derivatives of carboxylic acids, such as halogens or esters formed with ethylenically unsaturated alcohols, such as vinyl esters.

The organic starch ester prepared by the method of the present invention can have a degree of substitution of 1 to 3. The hydrocarbon moiety of the organic ester group can be saturated or unsaturated, aliphatic or aromatic, and may optionally be substituted by one or more of following groups: carboxylic, halide, amino, hydroxyether, and epoxy. The hydrocarbon moiety preferably comprises from 1 to 10 carbon atoms. Typical esters include acetic, propanoic, butanoic, maleic, malic, succinic, itaconic, chloroacetic, alanine and phthalic esters.

After the esterification the obtained organic starch ester can be separated from the solution by adding a non-solvent for the organic starch ester to precipitate the organic starch ester. The non-solvent should also be a non-solvent for the ionic liquid solvent and miscible with the ionic liquid solvent. Said non-solvent is preferably an alcohol, such as a C₁-C₆ alkanol, for example methanol, ethanol, propanol or isopropanol. Also other non-solvents, such as ketones (e.g. acetone), acetonitrile, polyglycols and ethers can be used. With appropriate DS of the organic starch esters, even water can be employed as a non-solvent.

It is also possible to separate the obtained organic starch ester by extraction with a suitable solvent that is a non-solvent for the ionic liquid solvent.

In a preferred embodiment of the invention, the method comprises the steps of:
(a) admixing native or hydrolyzed starch with an ionic liquid solvent in the substantial absence of water to form an admixture,
(b) stirring the admixture until the dissolution is complete,
(c) reacting the dissolved starch in the ionic liquid solvent with an organic esterifying agent in the absence of a catalyst for preparing an organic starch ester, and
(d) precipitating the organic starch ester from the reaction mixture by adding a non-solvent for the organic starch ester.

The main advantages of preferred methods of the present invention for the preparation of organic starch esters in ionic liquids are as follows:
- complete and fast dissolution of starch at temperatures below 100°C
- due to good solubility, possibility to employ all native starches in organic starch ester preparation
- reactions in non-aqueous media, which in turn accomplishes fast and economical separation of reaction products by precipitating the prepared product by adding a non-solvent for the product, and further, a simple, energy efficient drying procedure of the products
- possibility to separate the products with extraction with a non-solvent for the ionic liquid
- fast preparation of organic starch esters
- dramatically shorter reaction times and lower reaction temperatures by use of microwave irradiation and/or pressure
- easy control of the degree of substitution (DS)
- efficient preparation also of highly substituted organic starch esters
- preparation of organic starch esters without acid catalysts
- gentle reaction conditions diminishing the risk of chain degradation
- environmentally benign technique without use of harmful solvents as the ionic liquids can be reused.

The percentages in this specification refer to % by weight unless otherwise specified.

### Examples

### Example 1

### Acetylation of native barley starch

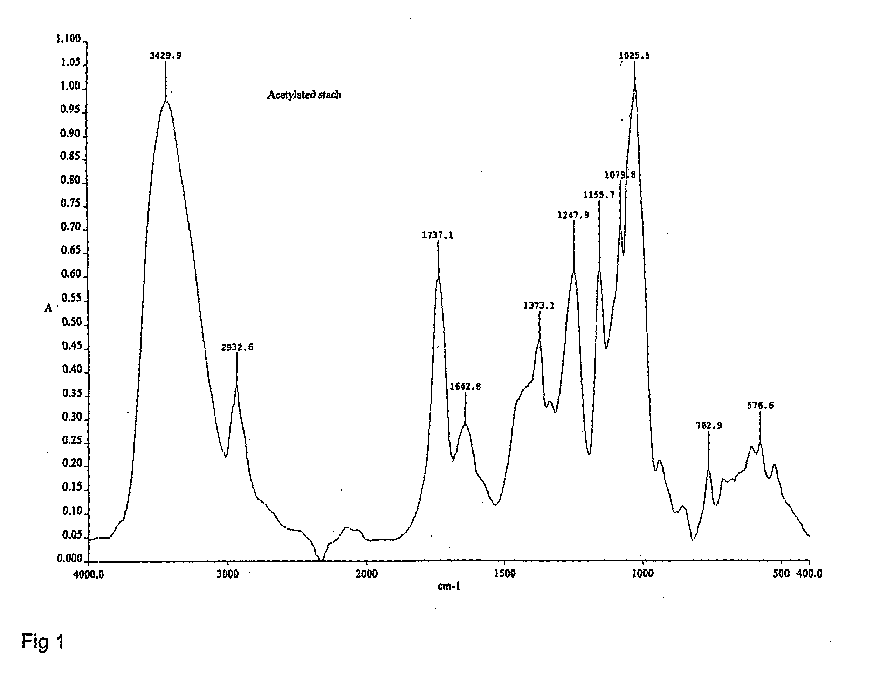

A 150 mg (1 mmol) sample of oven dried native barley starch was added into ionic liquid (BMIMCI, 3 ml) and the resulting mixture was stirred at 75°C for 25 minutes. A clear, 5% starch solution was formed and acetic anhydride (0.3 ml, 3 mmol) was added therein. The reaction was conducted for 15 minutes and quenched by adding dry ethanol (3 ml) with a syringe into the reaction mixture. While stirring the resulting mixture, the product precipitated from the reaction medium. The product was filtered off and washed with dry ethanol, oven dried and analyzed with FTIR. The obtained spectrum for acetylated starch is shown in Fig. 1 showing the acetyl OAc peak at 1737.1 cm⁻¹.

### Example 2

### Acetylation of hydrolyzed starch

A 150 mg (1 mmol) sample of oven dried, hydrolyzed starch was added into ionic liquid (BMIMCl, 3 ml) and the resulting mixture was stirred at 75°C for 25 minutes. A clear, 5% starch solution was formed and acetic anhydride (0.3 ml, 3 mmol) was added therein. The reaction was conducted for 15 minutes and quenched by adding dry isopropanol (3 ml) with a syringe into the reaction mixture. While stirring the resulting mixture, the product precipitated from the reaction medium. The product was filtered off and washed with dry isopropanol, oven dried and analyzed with FTIR. The spectrum was in accordance with the one shown in Fig. 1.

### Example 3

### Propionylation of native barley starch, D.S. = 1

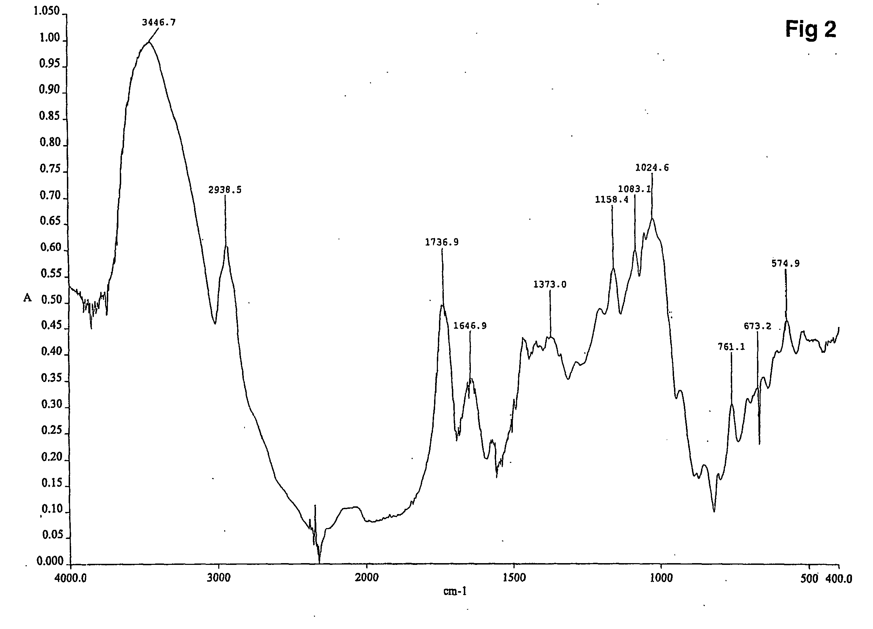

A 2 g (12.4 mmol) sample of oven dried native barley starch was added into ionic liquid (BMIMCI, 20 g) and the resulting mixture was stirred at 80°C for 20 minutes. A faintly opaque, 10% starch solution was formed and propionic anhydride (1.6 ml, 12.4 mmol) was slowly added therein. The reaction was conducted for 2 hours and quenched by adding ethanol (30 ml) into the reaction mixture. While stirring the resulting mixture, the product precipitated from the reaction medium. The product was filtered off and washed with ethanol, oven dried and analyzed with FTIR. The obtained spectrum for propionylated starch is shown in Fig. 2 showing the O-proplonyl peak at 1736.9 cm⁻¹. The prepared propionylated starch was soluble in water, but insoluble in alcohols such as methanol, ethanol and isopropanol.

### Example 4

### Propionylation of native barley starch, D.S. = 2

A 2 g (12.4 mmol) sample of oven dried native barley starch was added into ionic liquid (BMIMCI, 20 g) and the resulting mixture was stirred at 80°C for 20 minutes. A faintly opaque, 10% starch solution was formed and propionic anhydride (3.2 ml, 24.7 mmol) was slowly added therein. The reaction was conducted for 2 hours and quenched by adding ethanol (35 ml) into the reaction mixture. While stirring the resulting mixture, the product precipitated from the reaction medium. The product was filtered off and washed with ethanol, oven dried and analyzed with FTIR. The spectrum was in accordance with the one shown in Fig. 2. The prepared propionylated starch was somewhat soluble in water, and the precipitation with alcohols such as ethanol and methanol was not as unconditioned as with propionylated starch product in example 3.

### Example 5

### Propionylation of native barley starch, D.S. = 3

A 2 g (12.4 mmol) sample of oven dried native barley starch was added into ionic liquid (BMIMCI, 20 g) and the resulting mixture was stirred at 80°C for 20 minutes. A faintly opaque, 10% starch solution was formed and propionic anhydride (4.8 ml, 37.1 mmol) was slowly added therein. The reaction was conducted for 3 hours and quenched by adding water (30 ml) into the reaction mixture. While stirring the resulting mixture, the product precipitated from the reaction medium. The product was filtered off and washed with water, oven dried and analyzed with FTIR. The spectrum was in accordance with the one shown in Fig. 2. The prepared propionylated starch was insoluble in water, faintly soluble in methanol and even more, in ethanol.

### Example 6

### Esterification of native barley starch with maleic anhydride, D.S. = 1

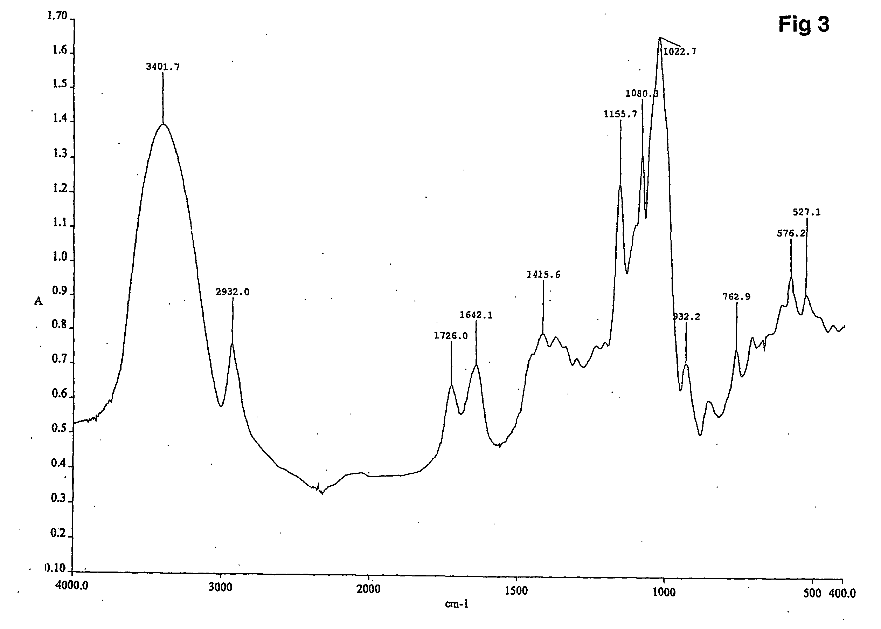

A 1 g (6.2 mmol) sample of oven dried native barley starch was added into ionic liquid (BMIMCI, 10 g) and the resulting mixture was stirred at 80°C for 20 minutes. A faintly opaque, 10% starch solution was formed and maleic anhydride (606 mg, 6.2 mmol) was slowly added therein. The reaction was conducted for 2 hours and quenched by adding methanol (30 ml) into the reaction mixture. While stirring the resulting mixture, the product precipitated from the reaction medium. The product was filtered off and washed with methanol, oven dried and analyzed with FTIR. The obtained spectrum for starch maleic ester is shown in Fig. 3 showing the maleic ester peak at 1726.0 cm⁻¹ and carboxylic acid giving it's characteristic peaks at 1642.1 cm⁻¹ and 1415.6 cm⁻¹. The prepared starch maleic ester was soluble in water, but insoluble in alcohols such as methanol, ethanol and isopropanol. The product is hygroscopic.

### Example 7

### Esterification of native barley starch with maleic anhydride, D.S. = 2

A 1 g (6.2 mmol) sample of oven dried native barley starch was added into ionic liquid (BMIMCI, 10 g) and the resulting mixture was stirred at 80°C for 20 minutes. A clear, 10% starch solution was formed and maleic anhydride (1212 mg, 12.4 mmol) was slowly added therein. The reaction was conducted for 2 hours and quenched by adding a solution of methanol and isopropanol (1:1, 40 ml) into the reaction mixture. While stirring the resulting mixture, the product precipitated from the reaction medium. The product was filtered off and washed with a solution of methanol and isopropanol (1:1), oven dried and analyzed with FTIR. The spectrum was in accordance with the one shown in Fig. 3. The prepared starch maleic ester was soluble in water, but insoluble in alcohols such as methanol and isopropanol. The product is hygroscopic.

### Example 8

### Esterification of native barley starch with maleic anhydride, D.S. = 3

A 1 g (6.2 mmol) sample of oven dried native barley starch was added into ionic liquid (BMIMCI, 10 g) and the resulting mixture was stirred at 80°C for 20 minutes. A clear, 10% starch solution was formed and maleic anhydride (1818 mg, 18.6 mmol) was slowly added therein. The reaction was conducted for 3 hours and quenched by adding a solution of methanol and isopropanol (1:1, 40 ml) into the reaction mixture. While stirring the resulting mixture, the product precipitated from the reaction medium. The product was filtered off and washed with a solution of methanol and isopropanol (1:1), oven dried and analyzed with FTIR. The spectrum was in accordance with the one shown in Fig. 3. The prepared starch maleic ester was soluble in water, but insoluble in alcohols such as methanol and isopropanol. The product is hygroscopic.

## Claims

1. A method for preparing an organic starch ester comprising mixing a starch material with an ionic liquid solvent to dissolve the starch, and then treating the dissolved starch with an organic esterifying agent to form an organic starch ester, and subsequently separating the organic starch ester from the solution.

2. The method according to claim 1 wherein microwave irradiation is applied to assist in dissolution and esterification.

3. The method according to claim 1 or 2 wherein pressure is applied to assist in dissolution and esterification.

4. The method according to claim 1 wherein the ionic liquid solvent is molten at a temperature of below 200°C.

5. The method according to claim 1 wherein the cation of the liquid solvent is selected from the group consisting of 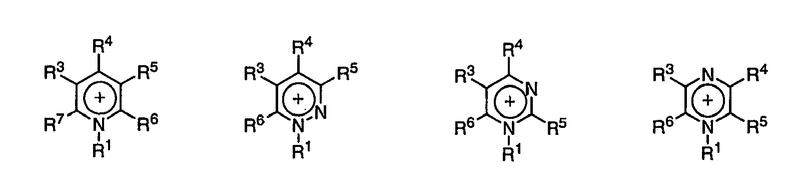 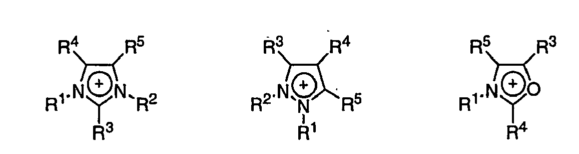 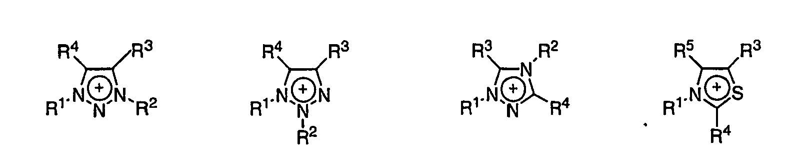 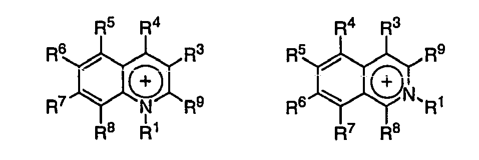 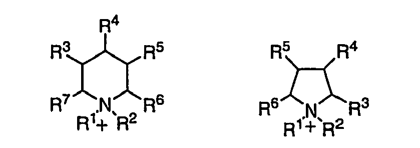 wherein R¹ and R² are independently a C₁-C₆ alkyl or C₂-C₆ alkoxyalkyl group, and R³, R⁴, R⁵, R⁶, R⁷, R⁸ and R⁹ are independently hydrogen, a C₁-C₆ alkyl, C₂-C₆ alkoxyalkyl or C₁-C₆ alkoxy group, and
wherein the anion of the ionic liquid solvent is halogen, pseudohalogen or C₁-C₆ carboxylate.

6. The method according to claim 5 wherein said cation comprises 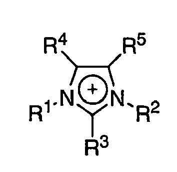 wherein R³-R⁵ are each hydrogen and R¹ and R² are the same or different and represent C₁-C₆ alkyl, and said anion is halogen, preferably chloride.

7. The method according to claim 1 wherein the starch material is native starch or hydrolyzed starch.

8. The method according to claim 1 wherein the organic starch ester is separated from the solution by adding a non-solvent for the organic starch ester to precipitate the organic starch ester.

9. The method according to claim 8 wherein said non-solvent is an alcohol, a ketone, acetonitrile, a polyglycol, an ether or water.

10. The method according to claim 1 wherein the organic starch ester is separated by extraction with a non-solvent for the ionic liquid solvent.

11. The method according to claim 1 wherein the organic esterifying agent is a C₁-C₁₁, preferabey a C₁-C₆ carboxylic acid or a reactive derivative thereof.

12. The method according to claim 11 wherein the C₁-C₆ carboxylic acid or a reactive derivative thereof is formic acid, acetic acid, propanoic acid, butanoic acid, acetic anhydride, propanoic anhydride or butanoic anhydride.

## Patentansprüche

1. Verfahren zum Herstellen eines organischen Stärkeesters, welches Folgendes aufweist: das Mischen eines Stärkematerials mit einem flüssigen ionischen Lösungsmittel, um die Stärke aufzulösen, dann das Behandeln der aufgelösten Stärke mit einem organischen Veresterungsmittel, um einen organischen Stärkeester zu bilden, und darauf folgend das Abtrennen des organischen Stärkeesters von der Lösung.

2. Verfahren gemäß Anspruch 1, wobei eine Mikrowellenbestrahlung angewandt wird, um die Auflösung und die Veresterung zu unterstützen.

3. Verfahren gemäß Anspruch 1 oder 2, wobei Druck angelegt wird, um die Auflösung und die Veresterung zu unterstützen.

4. Verfahren gemäß Anspruch 1, wobei das flüssige ionische Lösungsmittel bei einer Temperatur unterhalb von 200°C geschmolzen wird.

5. Verfahren gemäß Anspruch 1, wobei das Kation des flüssigen Lösungsmit- 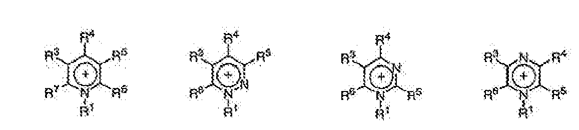 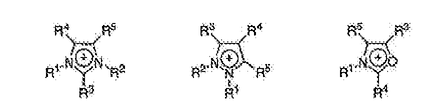 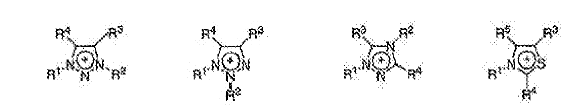 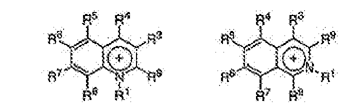 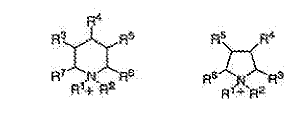 tels aus einer Gruppe ausgewählt ist, die aus den Folgenden besteht:
wobei R¹ und R² unabhängig voneinander eine C₁-C₆-Alkyl- oder eine C₂-C₆-Alkoxyalkyl-Gruppe sind und R³, R⁴, R⁵, R⁶, R⁷, R⁸ und R⁹ unabhängig voneinander Wasserstoff, eine C₁-C₆-Alkyl- oder eine C₂-C₆-Alkoxyalkyl- oder eine C₁-C₆-Alkoxy-Gruppe sind, und wobei das Anion des flüssigen ionischen Lösungsmittels ein Halogen, ein Pseudohalogen oder ein C₁-C₆-Carboxylat ist.

6. Verfahren gemäß Anspruch 5, wobei das Kation Folgendes aufweist, 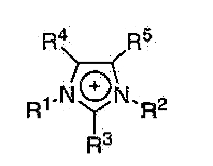 wobei R³-R⁵ jeweils ein Wasserstoff sind und R¹ und R² gleich oder verschieden sind und das C₁-C₆-Alkyl repräsentieren, und wobei das Anion ein Halogen ist, und zwar vorzugsweise ein Chlorid.

7. Verfahren gemäß Anspruch 1, wobei das Stärkematerial natürliche Stärke oder hydrolysierte Stärke ist.

8. Verfahren gemäß Anspruch 1, wobei der organische Stärkeester von der Lösung durch Hinzufügen eines Nicht-Lösungsmittels für den organischen Stärkeester abgetrennt wird, um den organischen Stärkeester auszufällen.

9. Verfahren gemäß Anspruch 8, wobei das Nicht-Lösungsmittel ein Alkohol, ein Keton, ein Acetonitril, ein Polyglykol, ein Ether oder Wasser ist.

10. Verfahren gemäß Anspruch 1, wobei der organische Stärkeester durch Extraktion mit einem Nicht-Lösungsmittel für das flüssige organische Lösungsmittel abgetrennt wird.

11. Verfahren gemäß Anspruch 1, wobei das organische Veresterungsmittel eine C₁-C₁₁-, vorzugsweise eine C₁-C₆-Carbonsäure oder ein reaktives Derivat davon ist.

12. Verfahren gemäß Anspruch 11, wobei die C₁-C₆-Carbonsäure oder ein reaktives Derivat davon Ameisensäure, Essigsäure, Propan- bzw. Propionsäure, Buttersäure, Essigsäureanhydrid, Propionsäureanhydrid oder Buttersäureanhydrid ist.

## Revendications

1. Procédé pour préparer un ester d'amidon comprenant le fait de mélanger une matière à base d'amidon avec un solvant liquide ionique, pour dissoudre l'amidon, et ensuite de traiter l'amidon dissous avec un agent d'estérification organique, pour former un ester d'amidon, et ensuite de séparer l'ester d'amidon organique de la solution.

2. Procédé selon la revendication 1, dans lequel une irradiation par micro-ondes est appliquée pour aider la dissolution et l'estérification.

3. Procédé selon la revendication 1 ou 2, dans lequel de la pression est appliquée pour aider la dissolution et l'estérification.

4. Procédé selon la revendication 1, dans lequel le solvant liquide ionique est fondu à une température inférieure à 200°.

5. Procédé selon la revendication 1, dans lequel le cation du solvant liquide est sélectionné parmi le groupe composé de 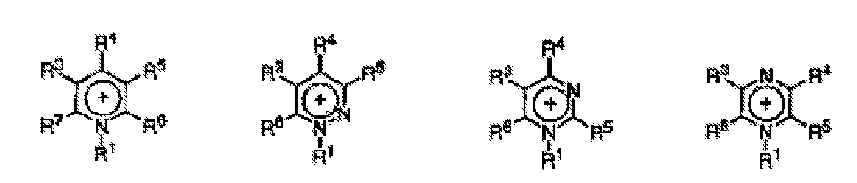 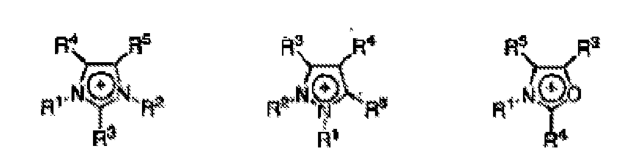 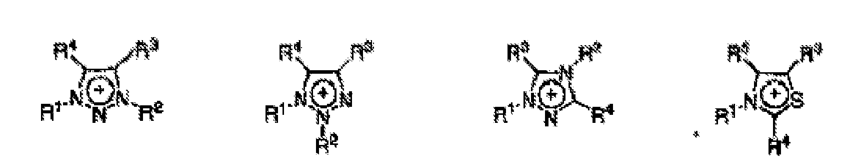 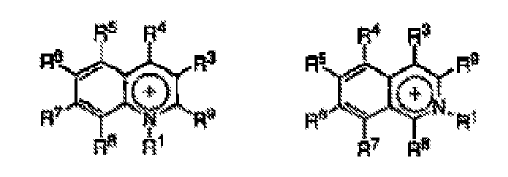 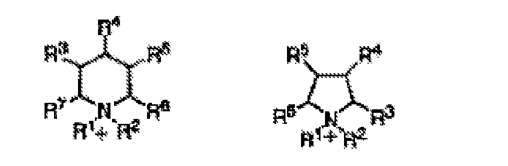 où R¹ et R² sont indépendamment un groupe alcoyle C₁-C₆ ou un groupe alkoxyalcoyle C₂-C₈, et R³, R⁴, R⁵, R⁶, R⁷, R⁸ et R⁹ sont indépendamment hydrogène, un groupe alcoyle C₁-C₆, un groupe alcoxyalcoyle C₂-C₈ ou un groupe alcoxy C₁-C₆, et
où l'anion du solvant liquide est un halogène, un pseudo-halogène ou du carboxylate C₁-C₈.

6. Procédé selon la revendication 5, dans lequel ledit cation comprend 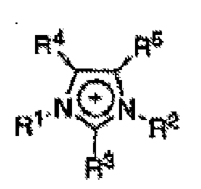 où R³ à R⁵ sont, chacun, hydrogène et R¹ et R² sont identiques ou différents et représentent alcoyle C₁-C₆, et ledit anion est un halogène, de préférence un chlorure.

7. Procédé selon la revendication 1, dans lequel la matière à base d'amidon est de l'amidon natif ou de l'amidon hydrolysé.

8. Procédé selon la revendication 1, dans lequel l'ester d'amidon organique est séparé de la solution en ajoutant un non-solvant pour l'ester d'amidon organique, pour faire précipiter l'ester d'amidon organique.

9. Procédé selon la revendication 8, dans lequel ledit non-solvant est un alcool, un cétone, de l'acétonitrile, un polyglycol, un éther ou de l'eau.

10. Procédé selon la revendication 1, dans lequel l'ester d'amidon organique est séparé par extraction avec un non-solvant pour le solvant liquide ionique.

11. Procédé selon la revendication 1, dans lequel l'agent d'estérification organique est un acide carboxylique C₁-C₁₁, de préférence C₁-C₆ ou un dérivé réactif de ce dernier.

12. Procédé selon la revendication 11, dans lequel l'acide carboxylique C₁-C₆ ou un dérivé réactif de ce dernier est de l'acide formique, de l'acide acétique, de l'acide propanoïque, de l'acide butanoïque, de l'anhydride acétique, de l'anhydride propanoïque ou de l'anhydride butanoïque.
